(19)

Europäisches
Patentamt
European
Patent Office
Office européen
des brevets

(11) **EP 4 353 354 A1**

(12) **EUROPEAN PATENT APPLICATION**

(43) Date of publication:
**17.04.2024 Bulletin 2024/16**

(21) Application number: **23197116.9**

(22) Date of filing: **13.09.2023**

(51) International Patent Classification (IPC):
**B01J 23/00** (2006.01)   **B01J 23/46** (2006.01)
**B01J 23/755** (2006.01)   **B01J 37/02** (2006.01)
**B01J 37/04** (2006.01)   **B01J 37/08** (2006.01)
**C01B 3/04** (2006.01)

(52) Cooperative Patent Classification (CPC):
**B01J 23/005; B01J 23/462; B01J 23/755;**
**B01J 37/0201; B01J 37/04; B01J 37/08;**
**C01B 3/047;** C01B 2203/1058; C01B 2203/1064;
Y02E 60/36

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.09.2022   CN 202211127938**

(71) Applicants:
• **Fuzhou University**
  **Fuzhou, Fujian 350108 (CN)**
• **FZU Zijin Hydrogen Power Technology Co., Ltd**
  **Fuzhou Fujian 350100 (CN)**

(72) Inventors:
• **Jiang, Lilong**
  **Fuzhou, Fujian Province, 350108 (CN)**
• **Chen, Chongqi**
  **Fuzhou, Fujian Province, 350108 (CN)**
• **Luo, Yu**
  **Fuzhou, Fujian Province, 350108 (CN)**
• **Ni, Jun**
  **Fuzhou, Fujian Province, 350100 (CN)**
• **Zhang, Qing**
  **Fuzhou, Fujian Province, 350100 (CN)**

(74) Representative: **Keil & Schaafhausen**
**Patentanwälte PartGmbB**
**Bockenheimer Landstraße 25**
**60325 Frankfurt am Main (DE)**

(54)    **SUPPORTED RU AND/OR NI CATALYST AND PREPARATION METHOD THEREOF**

(57)    The invention relates to a method for preparing a supported Ru and/or Ni catalyst, comprising the preparation of a spinel-type carrier by the S1 solid-phase method: mixing a magnesium precursor, a zinc precursor or a nickel precursor with an aluminum precursor in solid phase, Add additives, reduce the spinel formation temperature, and roast at the first temperature to obtain a spinel carrier; S2 load Ru and/or Ni active components on the spinel carrier: the spinel The stone carrier is placed in the Ru and/or Ni metal salt solution, impregnated, dried, and calcined at a second temperature to obtain a supported Ru and/or Ni catalyst. The invention solves the technical problems of relatively complicated preparation method of the ammonia decomposition catalyst, small specific area and uneven pore size distribution, and obtains higher catalyst ammonia decomposition reaction activity.

Figure 1

**Description**

**Technical Field**

The invention belongs to the field of metal spinel carrier catalysts, in particular to a supported Ru and/or Ni catalyst and a preparation method thereof.

**Background**

At present, the widely used ammonia decomposition catalysts in industry use Ru, Rh, Fe, Ni, Mo, etc. as active components, supported on $Al_2O_3$ or MgO carrier. For example, US Patent 5,188,811 introduces a gas ammonia decomposition catalyst made of Mo and Ti. At a reaction temperature of 700-900°C, the catalyst can decompose a small amount of NH 3 in the gas into $N_2$ and $H_2$ . Another example is the Chinese patent CN 1141214A, which uses magnesium oxide as the carrier and nickel as the active component. The spherical catalyst prepared by the impregnation method can meet the high temperature requirements of 1300°C. Chinese patent CN1245737A describes a kind of ammonia decomposition catalyst, with molybdenum and nickel as active components, loaded on the $Al_2O_3$ carrier , and the conversion rate of $NH_3$ is greater than 99.8% at 750 °C ; patent 102188977A discloses an ammonia The decomposition catalyst and its preparation method use magnesium oxide as a carrier to prepare a honeycomb catalyst by impregnating the active component nickel, and the use temperature of the catalyst is 1300°C. Also Chinese patent CN108031474A discloses a coke oven gas ammonia decomposition catalyst and a preparation method thereof, in which aluminum sol, magnesium nitrate and rare earth nitrate are dissolved in deionized water to prepare a mixed solution, react with each other, and then dry and granulate to obtain a carrier; The catalyst is obtained by impregnating the nickel-molybdenum mixed solution on the carrier. However, the preparation methods of these catalysts are relatively complicated, and the texture characteristics of the generated catalysts are not suitable, the reaction area is small, and the pore size is not suitable, resulting in low ammonia decomposition activity of the catalysts.

**Summary**

In view of the above-mentioned defects of the prior art, the present invention discloses a supported Ru and/or Ni catalyst and a preparation method thereof to solve the technical problems that the preparation method is relatively complicated and the pore size of the generated catalyst is not suitable.

In order to achieve the above object, according to an embodiment of the present invention, the present invention provides a method for preparing a supported Ru and/or Ni catalyst, comprising the following steps:

   S1. Preparation of spinel-type carrier by solid phase method: mixing magnesium precursor, zinc precursor or nickel precursor with aluminum precursor in solid phase, adding additives to obtain a large specific surface area, and roasting at the first temperature to obtain spinel carrier;

   S2. Loading Ru and/or Ni active components on the spinel-type carrier: place the spinel-type carrier in Ru and/or Ni metal salt solution, impregnate, dry, and heat at a second temperature Calcining at the bottom to obtain supported Ru and/or Ni catalysts.

   Preferably , the spinel carrier is $MgAl_2O_4$, $ZnAl_2O_4$, $NiAl_2O_4$, any one of them;

   Wherein, the aluminum precursor is alumina, aluminum nitrate, pseudoboehmite, aluminum hydroxide, basic aluminum carbonate, any one or more combinations thereof;

   If the spinel carrier is $MgAl_2O_4$, the magnesium precursor is magnesium oxide, magnesium carbonate, magnesium hydroxide, any one or more of them;

   If the spinel carrier is $ZnAl_2O_4$, the zinc precursor is basic zinc carbonate, zinc nitrate, zinc hydroxide, any one or more combinations thereof;

   If the spinel carrier is $NiAl_2O_4$, the nickel precursor is nickel nitrate or nickel hydroxide, any one or a combination thereof.

Preferably , in S1, magnesium precursor, zinc precursor or nickel precursor and aluminum precursor, wherein the molar ratio of divalent metal $Mg^{2+}$ , $Zn^{2+}$ and $Ni^{2+}$ to Al is 0.5:1~1:4.

Preferably , the auxiliary agent is polyphosphoric acid, boric acid, silicic acid, sodium silicate, phosphate, any one or a mixture of them .

Preferably , the weight proportion of the additive is: 0.5-10wt% of the total weight.

Preferably , in S1, the first temperature is 500-700°C, and the heating rate is 1-10°C/min.

Preferably , in S2, the impregnation is repeated several times, the drying temperature is 70-120°C, and the drying time is 0.5-24h.

Preferably , in S2, the supported Ru and/or Ni catalyst, the loading amount of Ru and/or Ni is: Ni accounts for 10-30wt% of the total weight, and Ru accounts for 0.5-12wt% of the total weight.

Preferably , in S2, the Ni salt is $Ni(NO_3)_2$ , $NiCl_2$ , $Ni(CH_3COO)_2$ , any one or a mixture of them; the Ru salt is $Ru(NO_3)_3$ , $RuCl_3$ , $K_2RuO_4$ , any one or a mixture of them.

To achieve the above purpose, according to an embodiment of the present invention, the present invention provides a supported Ru and/or Ni catalyst prepared by the above preparation method.

The beneficial effects of the present invention are :

The synthesis of the spinel carrier in the invention adopts solid-phase reaction, that is, solid-solid reaction, and the reaction raw materials are all solid. Affected by mass transfer and heat transfer, the solid phase reaction needs to be carried out at a certain high temperature, the reaction speed is slow, the formed product is uniform, and there is no waste liquid discharge. The present invention also adds a certain amount of additives to the reactant, so that the reactant can obtain a higher diffusion rate at a lower temperature, and then a chemical reaction occurs, and a large specific surface area (> 100 in the embodiment) is prepared. $m^2/g$), spinel oxide with suitable pore size distribution; then use it as a carrier to load active metals by impregnation (or multiple impregnations), so that the active metals are evenly loaded on the outer surface of the carrier particles and the inner surface of the pores, improving Improve the dispersion of active metals and obtain higher catalyst reactivity.

## Brief Description of drawings

Fig. 1 is the flow chart of preparing supported Ru and/or Ni catalyst of the present invention ;

Fig.2 is the catalyst nitrogen adsorption-desorption isotherm curve prepared by the method of embodiment 1 and 2 of the present invention;

Fig. 3 is the pore size distribution curve of the catalysts prepared by the methods of Examples 1 and 2 of the present invention.

## Detailed Description

In order to describe in detail the possible application scenarios, technical principles, specific solutions that can be implemented, goals and effects that can be achieved, etc., the following will be described in detail in conjunction with the listed specific embodiments and accompanying drawings. The embodiments described herein are only used to illustrate the technical solutions of the present application more clearly, so they are only examples, and cannot be used to limit the protection scope of the present application.

Reference herein to an "embodiment" means that a particular feature, structure, or characteristic described in connection with the embodiment can be included in at least one embodiment of the present application. The word "embodiment" appearing in various positions in the specification does not necessarily refer to the same embodiment, nor does it specifically limit its independence or relationship with other embodiments. In principle, in this application, as long as there is no technical contradiction or conflict, each technical feature mentioned in each embodiment can be combined in any way to form a corresponding implementable technical solution.

Unless otherwise defined, the meanings of the technical terms used herein are the same as those commonly understood by those skilled in the art to which the application belongs; the use of relevant terms herein is only to describe specific embodiments, and is not intended to limit the application.

Hereinafter, embodiments of the present application will be specifically disclosed in detail with reference to the drawings as appropriate. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following descriptions are provided for those skilled in the art to fully understand the present application, and are not intended to limit the subject matter described in the claims.

A "range" disclosed herein is defined in terms of lower and upper limits, and a given range is defined by selecting a lower limit and an upper limit that define the boundaries of the particular range. Ranges defined in this manner may be inclusive or exclusive and may be combined arbitrarily, ie any lower limit may be combined with any upper limit to form a range. For example, if ranges of 60-120 and 80-110 are listed for a particular parameter, it is understood that ranges of 60-110 and 80-120 are contemplated. Additionally, if the minimum range values 1 and 2 are listed, and if the maximum range values 3, 4, and 5 are listed, the following ranges are all expected: 1-3, 1-4, 1-5, 2- 3, 2-4 and 2-5. In this application, unless otherwise stated, the numerical range "ab" represents an abbreviated representation of any combination of real numbers between a and b, where a and b are both real numbers. For example, the numerical range "0-5" indicates that all real numbers between "0-5" have been listed in this article, and "0-5" is only an abbreviated representation of the combination of these values. In addition, when expressing that a certain parameter is an integer $\geq 2$, it is equivalent to disclosing that the parameter is an integer such as 2, 3, 4, 5, 6, 7, 8, 9, 10, 11, 12, etc.

If there is no special description, all the implementation modes and optional implementation modes of the present application can be combined with each other to form new technical solutions.

If there is no special description, all the technical features and optional technical features of the present application can be combined with each other to form a new technical solution.

Unless otherwise specified, all steps in the present application can be performed sequentially or randomly, preferably sequentially. For example, the method includes steps (a) and (b), which means that the method may include steps (a) and (b) performed in sequence, and may also include steps (b) and (a) performed in sequence. For example, mentioning that the method may also include step (c) means that step (c) may be added to the method in any order, for example, the method may include steps (a), (b) and (c) , may also include steps (a), (c) and (b), may also include steps (c), (a) and (b) and so on.

If there is no special description, the "comprising" and "comprising" mentioned in this application mean open or closed. For example, the "comprising" and "comprising" may mean that other components not listed may be included or included, or only listed components may be included or included.

The terms "above" and "below" used in this application include the number, for example, "more than one" refers to one or more, "more than one of A and B" refers to "A", "B" or "A and B".

In this application, the term "or" is inclusive unless otherwise stated. For example, the phrase "A or B" means "A, B, or both A and B." More specifically, the condition "A or B" is satisfied by either of the following: A is true (or exists) and B is false (or does not exist); A is false (or does not exist) and B is true (or exists) ; or both A and B are true (or exist).

Unless otherwise stated, the contents and percentages in the context of the present application are based on mass.

The experimental methods described in the following examples, unless otherwise specified, are conventional methods; the reagents and materials, unless otherwise specified, can be obtained from commercial sources.

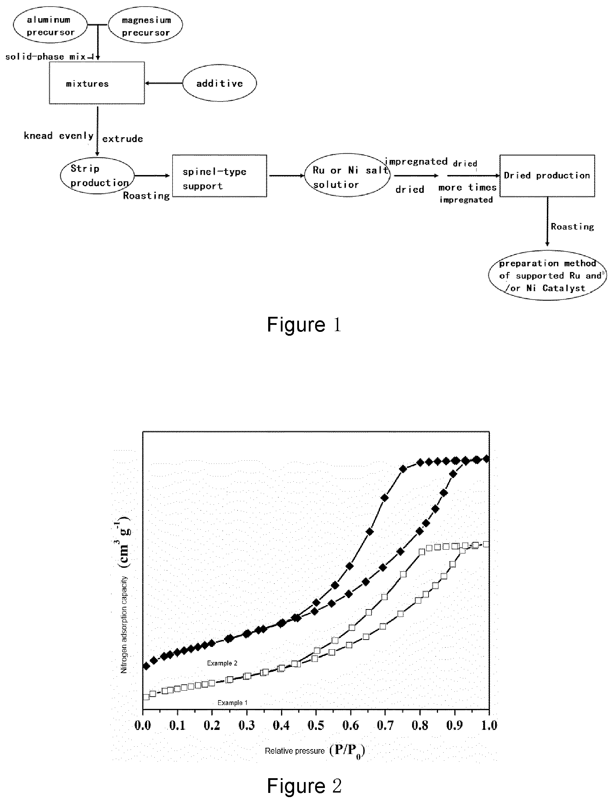

As shown in Figure 1 the present invention provides a kind of preparation method of loaded Ru and/or Ni catalyst, comprises the steps:

S1. Preparation of spinel-type carrier by solid phase method: mixing magnesium precursor, zinc precursor or nickel precursor and aluminum precursor in solid phase, adding additives, and roasting at the first temperature to obtain spinel-type carrier;

S2. Loading Ru and/or Ni on the spinel-type carrier: placing the spinel-type carrier in Ru and/or Ni metal salt solution, drying after reaction, and calcining at a second temperature to obtain Supported Ru and/or Ni catalysts.

**Embodiment 1**

A preparation method of supported Ru or Ni base (can be used for ammonia decomposition, the same below) catalyst, comprising the following steps:

S1, preparation of spinel-type support (taking $MgAl_2O_4$ as an example):

$MgAl_2O_4$ carrier in one step by solid phase method , the steps are as follows:

Mix magnesium nitrate and aluminum nitrate with a Mg/Al molar ratio of 1:4 in a ball mill for 30 minutes in a solid phase; after fully mixing, add 5wt% polyphosphoric acid to the mixture, knead evenly and extrude; then extrude the obtained The product is calcined at 600°C for 4 hours to obtain the $MgAl_2O_4$ carrier;

S2, preparation of supported Ru-based catalyst:
Weigh 2g of the above-mentioned $MgAl_2O_4$ carrier and place it in 10mL of a solution with a metal ion concentration of 0.1mol/L, and impregnate it several times under the same conditions until the Ru content reaches the target loading capacity (Ru: 10wt%); The sample was calcined at 500°C for 4h to prepare the supported Ru catalyst.

**Embodiment 2**

A preparation method of supported Ru or Ni-based ammonia decomposition catalyst, comprising the following steps:

S1, preparation of spinel-type support:
$NiAl_2O_4$ support was prepared in one step by the solid phase method , and the steps were as follows:
Basic zinc carbonate and aluminum hydroxide are initially mixed in the solid phase according to the Zn/Al molar ratio of 1:2, and mixed by solid phase grinding for 15 minutes. After mixing thoroughly, 10wt% sodium silicate is added to the mixture, and kneaded evenly. extruding, and calcining the extruded product at 550°C for 4 hours to obtain a $ZnAl_2O_4$ carrier;

S2, preparation of supported Ru-Ni based catalyst:
Weigh 2g of the above-mentioned $ZnAl_2O_4$ carrier and place it in 10mL of a solution with a metal ion concentration of 0.1mol/L. Under the same conditions, it is impregnated several times until the Ru and Ni content reaches the target loading capacity (Ni: 10wt%, Ru: 5wt%)); the dried sample was calcined at 700°C for 4h at a heating rate of 5°C/min to prepare the supported Ru-Ni catalyst.

**Embodiment 3**

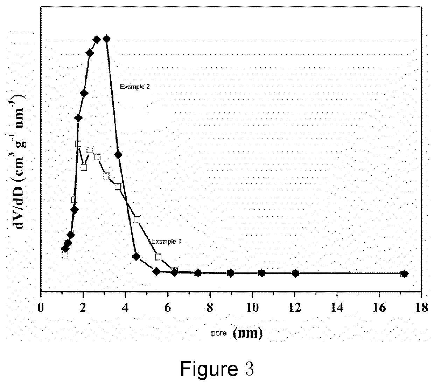

A preparation method of supported Ru-Ni base ammonia decomposition catalyst, comprising the following steps:
The first step is to prepare the spinel carrier:
$NiAl_2O_4$ support was prepared in one step by the solid phase method , and the steps were as follows:
Mix nickel nitrate and pseudo-boehmite in the solid phase according to the Ni/Al molar ratio of 1:1.5, and use solid phase grinding to mix for 15 minutes. After fully mixing, add 10wt% boric acid to the mixture, knead evenly, and then extrude, the extruded product was calcined at a heating rate of 2° C./min to 600° C. for 4 hours to obtain a $NiAl_2O_4$ carrier.
The second step is to prepare supported Ru-Ni based catalyst:
$K_2RuO_4$ with a loading capacity of 1wt% Ru , dissolve it in 10ml of water, then weigh 2g of the $NiAl_2O_4$ $_{carrier}$ prepared in the first step and place it in the above solution, and immerse it several times until the Ru content reaches the target negative Loading capacity, the dried sample was calcined at a heating rate of 2°C/min to 600°C for 4h to prepare a supported Ru-Ni based catalyst.
In order to illustrate the effect of preparing supported Ru-Ni based catalysts of the present invention, the inventor also conducted research experiments on the physical and chemical properties of supported Ru-Ni based catalysts made in the above examples, and studied the catalyst nitrogen adsorption and desorption isotherms and catalyst nitrogen absorption and desorption isotherms . The pore size distribution curves are shown in Figure 2 and Figure 3 respectively ; in addition, the structural parameters of the catalyst were also measured, as shown in Table 1. It can be seen that by adopting the method of the present invention, the most probable pore diameter of the prepared catalyst is 1.0-6.0 nm, the specific surface area of the catalyst is large, and a higher ammonia decomposition reaction efficiency is obtained.

Table 1 Catalyst Texture Parameters

| sample | Example 1 | Example 2 |
| --- | --- | --- |
| BET specific surface area (m $^2$/g) | 1 05 | 1 55 |
| Pore volume (cm $^3$/g) | 0.20 _ | 0.28 _ |
| Most probable pore diameter (nm) | 2 .7 | 2 .6 |

Among them, the catalyst nitrogen adsorption and desorption isotherm curve test method: use the ASAP 2020 instrument of the American Micromeritics company , adopt the $N_2$ physical adsorption method, and measure the catalyst nitrogen adsorption and desorption isotherm curve at the liquid nitrogen temperature ( -196°C ) , before the test , the samples were degassed in vacuo at 200 °C for 4 h. The pore size distribution of the catalyst was obtained by the Barret-Joiner-Halenda (BJH) method , and the specific surface area of the catalyst was calculated by the Brunauer-Emmett-Teller (BET) method .

from Figure 2 that the isothermal adsorption-desorption curve is IV, indicating that the catalyst has small mesopores;

the hysteresis ring is H2 type, and the pore structure is ink bottle.

from Figure 3 that the pore size of the catalyst is mainly distributed in the range of 1.0-6.0 nm, which is a mesoporous structure.

Experimental example

The specific application method of the supported Ru and/or Ni catalyst prepared in the above examples is as follows: the ammonia decomposition activity of the catalyst is measured in a fixed bed reactor, the feed gas is pure ammonia , the catalyst is reduced at 500 °C for 2 h , and the reaction space velocity is 10000 mL. $g^{-1}.h^{-1}$, the catalyst activity test temperature range is 450~650 °C.

The activity of the catalysts is represented by NH3 conversion .

$$NH_3 \text{ conversion} = (1 - V_{NH3}'/V_{NH3})/(1 + V_{NH3}) \times 100 \%$$

Wherein, $V_{NH3}$, is the volume percentage of $NH_3$ in the reactor outlet gas , and $V_{NH3}$ is the volume percentage of $NH_3$ in the feed gas . According to above-mentioned NH conversion rate formula, according to measured data, can obtain embodiment 1, embodiment 2, the catalytic effect of embodiment 3 at different temperatures is as follows, as seen even at 450 °, under the lower situation of temperature, embodiment 1 Also have higher ammonia decomposition catalytic activity, and after the temperature reaches 650 °, the NH conversion of Examples 1-3 all reached 99.8 %.

Table 2 Catalyst ammonia decomposition activity evaluation results

| Reaction temperature (°C) | Example 1 | Example 2 | Example 3 |
|---|---|---|---|
| 450 | 85.4 | 62.5 | 48.9 |
| 550 | 99.6 | 97.2 | 93.5 |
| 650 | 99.8 | 99.8 | 99.8 |

Finally, it is noted that the above embodiments are only used to illustrate the technical solutions of the present invention without limitation. Although the present invention has been described in detail with reference to the preferred embodiments, those of ordinary skill in the art should understand that the technical solutions of the present invention can be carried out Modifications or equivalent replacements, without departing from the spirit and scope of the technical solution, should be included in the scope of the claims of the present invention.

**Claims**

1.    A preparation method of supported Ru and/or Ni catalyst, is **characterized in that**, comprises the steps:

   S1. Preparation of spinel-type carrier by solid phase method: mixing magnesium precursor, zinc precursor or nickel precursor with aluminum precursor in solid phase, adding additives to obtain a large specific surface area, and roasting at the first temperature to obtain spinel carrier;
   S2. Loading Ru and/or Ni active components on the spinel-type carrier: place the spinel-type carrier in Ru and/or Ni metal salt solution, impregnate, dry, and heat at a second temperature Calcining at the bottom to obtain supported Ru and/or Ni catalysts.

2.    Supported Ru and/or Ni catalysts according to claim 1, wherein the spinel-type carrier is $MgAl_2O_4$ , $ZnAl_2O_4$ , $NiAl_2O_4$, any one of them ;

   Wherein, the aluminum precursor is alumina, aluminum nitrate, pseu-doboehmite, aluminum hydroxide, basic aluminum carbonate, any one or more combinations thereof;
   If the spinel carrier is $MgAl_2O_4$, the magnesium precursor is magnesium oxide, magnesium carbonate, magnesium hydroxide, any one or more of them;
   If the spinel carrier is $ZnAl_2O_4$, the zinc precursor is basic zinc carbonate, zinc nitrate, zinc hydroxide, any one or more combinations thereof;

If the spinel carrier is $NiAl_2O_4$, the nickel precursor is nickel nitrate or nickel hydroxide, any one or a combination thereof.

3. The Ru and/or Ni catalysts as claimed in claim 1 , **characterized in that**, in S1, magnesium precursors, zinc precursors or nickel precursors and aluminum precursors, wherein the divalent metal $Mg_2^+$, The molar ratio of $Zn_2$ to $Ni^{2+}$ to Al is 0.5:1~1:4.

4. The Ru and/or Ni catalyst as claimed in claim 1 , is **characterized in that**, described auxiliary agent is polyphosphoric acid, boric acid, silicic acid, sodium silicate, phosphate, wherein any one or Various mixtures .

5. The Ru and/or Ni catalyst according to claim 1 , **characterized in that**, the weight ratio of the auxiliary agent is: 0.5-10wt% of the total weight.

6. The Ru and/or Ni catalyst according to claim 1 , **characterized in that**, in S1, the first temperature is 500-700°C, and the heating rate is 1-10°C/min .

7. The Ru and/or Ni catalyst according to claim 1 , **characterized in that**, in S2, the impregnation is repeated several times, the drying temperature is 70-120°C, and the drying time is 0.5-24h.

8. The Ru and/or Ni catalyst as claimed in claim 1 , is **characterized in that**, in S2, supported Ru and/or Ni catalyst, the load of Ru and/or Ni is: Ni accounts for total weight 10-30wt%, Ru accounts for 0.5-12wt% of the total weight.

9. TheRu and/or Ni catalyst as claimed in claim 1 , **characterized in that**, in S2, the Ni salt is $Ni(NO_3)_2$, $NiCl_2$, $Ni(CH_3COO)_2$ , any of which A mixture of one or more; Ru salt is $Ru(NO_3)_3$, $RuCl_3$, $K_2RuO_4$, any one or a mixture of more.

10. The Ru and/or Ni catalyst, prepared by the preparation method according to any one of claims 1-9.

Figure 1

Figure 2

Figure 3

Europäisches
Patentamt

European
Patent Office

Office européen
des brevets

# EUROPEAN SEARCH REPORT

Application Number

EP 23 19 7116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIU YU ET AL: "Catalyst support effect on ammonia decomposition over Ni/MgA12O4 towards hydrogen production", INTERNATIONAL JOURNAL OF HYDROGEN ENERGY, ELSEVIER, AMSTERDAM, NL, vol. 47, no. 8, 6 December 2021 (2021-12-06), pages 5044-5052, XP086931769, ISSN: 0360-3199, DOI: 10.1016/J.IJHYDENE.2021.11.117 [retrieved on 2021-12-06] * Chapter "Experimental"; page 5045 * | 1-10 | INV. B01J23/00 B01J23/46 B01J23/755 B01J37/02 B01J37/04 B01J37/08 C01B3/04 |
| X | OKAL JANINA ET AL: "Catalytic combustion of methane over ruthenium supported on zinc aluminate spinel", APPLIED CATALYSIS A: GENERAL, ELSEVIER, AMSTERDAM, NL, vol. 453, 5 January 2013 (2013-01-05), pages 349-357, XP028976090, ISSN: 0926-860X, DOI: 10.1016/J.APCATA.2012.12.040 * abstract * * Experimental * | 2-10 | |

-/--

| | |
|---|---|
| TECHNICAL FIELDS SEARCHED (IPC) | B01J C01C C01B |

The present search report has been drawn up for all claims

| Place of search | Date of completion of the search | Examiner |
|---|---|---|
| Munich | 28 February 2024 | Zieba, Roman |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 19 7116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUO ZHIRUO ET AL: "Size effect of Ru particles on the self-reforming-driven hydrogenolysis of a lignin model compound", CATALYSIS SCIENCE & TECHNOLOGY, vol. 12, no. 16, 16 August 2022 (2022-08-16), pages 5143-5151, XP93135777, UK ISSN: 2044-4753, DOI: 10.1039/D2CY00688J Retrieved from the Internet: URL:https://pubs.rsc.org/en/content/articlepdf/2022/cy/d2cy00688j> * abstract * ----- | 2-10 | |
| A | CN 113 694 922 A (UNIV SHIHEZI) 26 November 2021 (2021-11-26) * the whole document * ----- | 1-10 | |

TECHNICAL FIELDS
SEARCHED     (IPC)

The present search report has been drawn up for all claims

| Place of search | Date of completion of the search | Examiner |
|---|---|---|
| Munich | 28 February 2024 | Zieba, Roman |

EPO FORM 1503 03.82 (P04C01)

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................
& : member of the same patent family, corresponding
document

## ANNEX TO THE EUROPEAN SEARCH REPORT
## ON EUROPEAN PATENT APPLICATION NO.

**EP 23 19 7116**

This annex lists the patent family members relating to the patent documents cited in the above-mentioned European search report.
The members are as contained in the European Patent Office EDP file on
The European Patent Office is in no way liable for these particulars which are merely given for the purpose of information.

**28-02-2024**

| Patent document cited in search report | Publication date | Patent family member(s) | Publication date |
|---|---|---|---|
| CN 113694922 A | 26-11-2021 | NONE | |

EPO FORM P0459

For more details about this annex : see Official Journal of the European Patent Office, No. 12/82

**REFERENCES CITED IN THE DESCRIPTION**

**Patent documents cited in the description**

- US 5188811 A
- CN 1141214 A
- CN 1245737 A
- WO 102188977 A
- CN 108031474 A